# FASCICULE DE BREVET EUROPEEN

(11) **EP 3 965 242 B1**
(45) Date de publication et mention de la délivrance du brevet: **07.06.2023**
(21) Numéro de dépôt: 21192917.9
(22) Date de dépôt: 24.08.2021
(51) Int. Cl.: H02G 3/32, H02G 3/00, F16L 3/10, F16L 3/12, F16L 3/24, H02G 3/04

(54) **RAMPE À GÉOMÉTRIE VARIABLE POUR HARNAIS ÉLECTRIQUE ET AÉRONEF COMPORTANT AU MOINS UNE TELLE RAMPE**
RAMPE MIT VARIABLER GEOMETRIE FÜR ELEKTRISCHE KABELBÄUME UND LUFTFAHRZEUG MIT MINDESTENS EINER SOLCHEN RAMPE
RAMP WITH VARIABLE GEOMETRY FOR ELECTRICAL HARNESS AND AIRCRAFT COMPRISING AT LEAST ONE SUCH RAMP

(30) Priorité: 03.09.2020 FR 2008925
(43) Date de publication de la demande: 09.03.2022
(73) Titulaire: Airbus Operations SAS, 31060 Toulouse (FR)
(72) Inventeur: MILLET, M. Gérard, 31060 TOULOUSE (FR); DELPY, M. Vincent, 31060 TOULOUSE (FR)
(74) Mandataire: Fantin, Laurent

(56) Documents cités:
- FR-A1- 2 962 716
- US-A- 5 388 790
- US-A1- 2012 037 418
- US-A1- 2015 285 407

## Description

La présente demande se rapporte à une rampe à géométrie variable pour harnais électrique ainsi qu'à un aéronef comportant au moins une telle rampe.

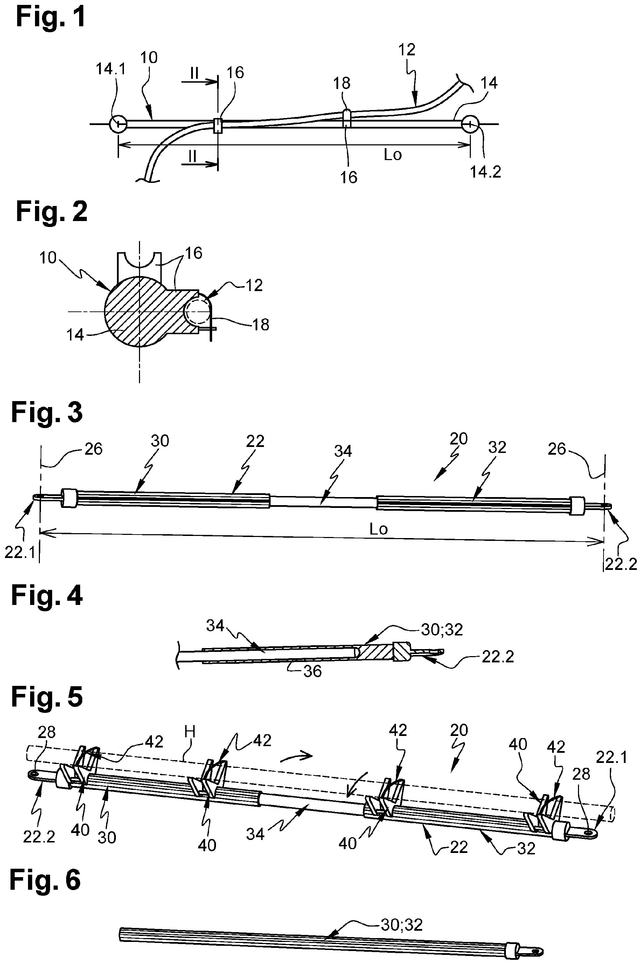

Selon un mode de réalisation visible sur les figures 1 et 2, une rampe 10 supportant un harnais électrique 12 comprend une barre 14 rectiligne, de longueur fixe et reliée à chacune de ses extrémités à un support (non représenté) grâce à des éléments de fixation 14.1, 14.2, ainsi que plusieurs supports 16, solidaires de la barre 14, permettant de relier le harnais électrique 12 à la barre 14 grâce à des colliers de serrage 18 de type autobloquant par exemple. Comme illustré sur la figure 2, les supports 16 et la barre 14 forment une unique pièce.

Pour chaque modèle de rampe 10, la longueur L0 de la barre 14 est fixe, le nombre de supports 16 est fixe, leurs position et orientation par rapport à la barre 14 sont fixes.

En pratique, la distance séparant les éléments de fixation 14.1, 14.2 variant en fonction du positionnement de la barre 14 dans l'aéronef, la longueur de la barre 14 varie d'une rampe à l'autre. De même, le chemin suivi par le harnais électrique variant en fonction du positionnement du harnais électrique dans l'aéronef, l'orientation et le positionnement des supports varient d'une rampe à l'autre.

Par conséquent, il est nécessaire de prévoir un grand nombre de modèles de rampes, chaque modèle de rampe comportant une barre d'une certaine longueur et des supports 16 positionnés et orientés d'une certaine manière.

Ce grand nombre de modèles engendre des espaces et des coûts de stockage importants ainsi qu'une gestion complexe des approvisionnements. FR2962716A1 divulgue une barre, comprenant deux parties coulissantes, dans laquelle chaque partie coulissante a une extrémité qui est attachée à un support. Pour transporter des câbles électriques, FR2962716A1 divulgue l'utilisation de trous et de pions pour fournir un support à un harnais de câbles le long de la barre.Le document US2015285407A1 divulgue un rail comportant une pluralité de trous équidistants et un support pour des conduites qui peut être inséré dans l'un quelconque des trous espacés. Le support pour conduites a une tige qui s'insère et fixe ledit support pour conduites au rail. US5388790A divulgue un cadre de support et de guidage pour un câblage électrique destiné à être utilisé dans une carrosserie d'avion. Le cadre de guidage comprend une pluralité de composants tubulaires horizontaux, de composants verticaux et de composants transversaux. Ces composants tubulaires sont interconnectés par des éléments de verrouillage ou de connexion, tels que des éléments en T, des éléments de pontage et des éléments d'angle. Les éléments sont tous des éléments de verrouillage ayant des embouts de verrouillage de configuration cylindrique pour s'adapter aux sections transversales circulaires ouvertes aux extrémités des composants tubulaires.

La présente invention vise à remédier à tout ou partie des inconvénients de l'art antérieur.

A cet effet, l'invention a pour objet une rampe pour harnais électrique selon la revendication 1.

Grâce au coulissement entre les première et deuxième parties, la longueur de la barre de la rampe peut varier et être ajustée en fonction de la distance séparant les éléments de fixation prévus pour relier les première et deuxième extrémités de la barre au support. Selon une autre caractéristique, au moins un support est relié à l'une des parties de la barre par une liaison démontable.

Selon une autre caractéristique, la barre comprend une première partie comportant la première extrémité, une deuxième partie comportant la deuxième extrémité ainsi qu'une partie intermédiaire intercalée entre les première et deuxième parties coulissantes par rapport à au moins une des première et deuxième parties.

Selon une autre caractéristique, les première et deuxième parties sont identiques et comprennent chacune un tube présentant une surface extérieure, une surface intérieure ainsi qu'une première extrémité ouverte via laquelle est introduite la partie intermédiaire, cette dernière présentant une surface extérieure lui permettant de coulisser dans le tube de la première ou deuxième partie.

Selon une autre caractéristique, la surface extérieure de la partie intermédiaire présente une section transversale circulaire, la surface intérieure du tube de la première ou deuxième partie présentant une section transversale circulaire identique à celle de la surface extérieure de la partie intermédiaire.

Selon une autre caractéristique, la rampe comprend un joint d'étanchéité solidaire de la première ou deuxième partie et positionné dans le tube, sur la surface intérieure, à proximité de sa première extrémité.

Selon une autre caractéristique, le support est réalisé en une seule pièce et comprend une première zone comportant une surface présentant une forme complémentaire à celle de la surface extérieure du tube de la première ou deuxième partie de la barre pour relier, de manière démontable, le support et la première ou deuxième partie.

Selon une autre caractéristique, le support comprend deux ailes identiques, positionnées dans des plans transversaux en fonctionnement et espacées entre elles, ainsi qu'au moins un élément de jonction pour relier les deux ailes, chaque aile comprenant un premier bord en arc de cercle présentant une forme complémentaire à celle de la surface extérieure du tube de chacune des première et deuxième parties.

Selon une autre caractéristique, le support comprend des premier et deuxième mors ainsi qu'un élément de liaison permettant de relier les premier et deuxième mors pour qu'ils enserrent la première ou deuxième partie de la barre.

L'invention a également pour objet un aéronef selon la revendication 10.

D'autres caractéristiques et avantages ressortiront de la description de l'invention qui va suivre en regard des dessins annexés parmi lesquels :
- La figure 1 est une vue de latérale d'une rampe supportant un harnais électrique illustrant un mode de réalisation de l'art antérieur,
- La figure 2 est une coupe transversale selon la ligne II-II de la figure 1,
- La figure 3 est une vue latérale d'une rampe pour harnais électrique, sans support, illustrant un mode de réalisation de l'invention,
- La figure 4 est une coupe longitudinale d'une partie de la rampe visible sur la figure 3,
- La figure 5 est une vue en perspective d'une rampe pour harnais électrique équipée de supports illustrant un mode de réalisation de l'invention,
- La figure 6 est une vue en perspective d'une première partie d'une rampe pour harnais électrique illustrant un mode de réalisation de l'invention,
- La figure 7 est une vue latérale d'une partie intermédiaire d'une rampe pour harnais électrique illustrant un mode de réalisation de l'invention,
- La figure 8 est une vue en perspective d'un support illustrant un premier mode de réalisation de l'invention,
- La figure 9 est une coupe transversale du support visible sur la figure 8 et de la première partie d'une rampe visible sur la figure 6,
- La figure 10 est une vue en perspective d'une extrémité de la première partie d'une rampe illustrant un mode de réalisation de l'invention,
- La figure 11 est une vue en perspective de supports positionnés selon différentes orientations illustrant différentes configurations de la rampe visible sur la figure 5,
- La figure 12 est une vue en perspective de deux supports positionnés diamétralement opposés illustrant une configuration selon l'invention,
- La figure 13 est une vue en perspective d'un support illustrant un deuxième mode de réalisation de l'invention,
- La figure 14 est une vue en perspective d'une rampe équipée du support visible sur la figure 13 selon un premier angle de vue,
- La figure 15 est une vue en perspective d'une rampe équipée du support visible sur la figure 13 selon un deuxième angle de vue, et
- La figure 16 est une vue latérale d'une partie d'une rampe illustrant un autre mode de réalisation.

Selon un mode de réalisation visible sur les figures 5, 9 et 16, une rampe 20, positionnée dans un véhicule tel qu'un aéronef, permet de supporter un harnais électrique H (visible sur les figures 5, 9 et 16).

Par harnais électrique, on entend un ou plusieurs câble(s) électrique(s) regroupé(s) suivant un chemin de câble.

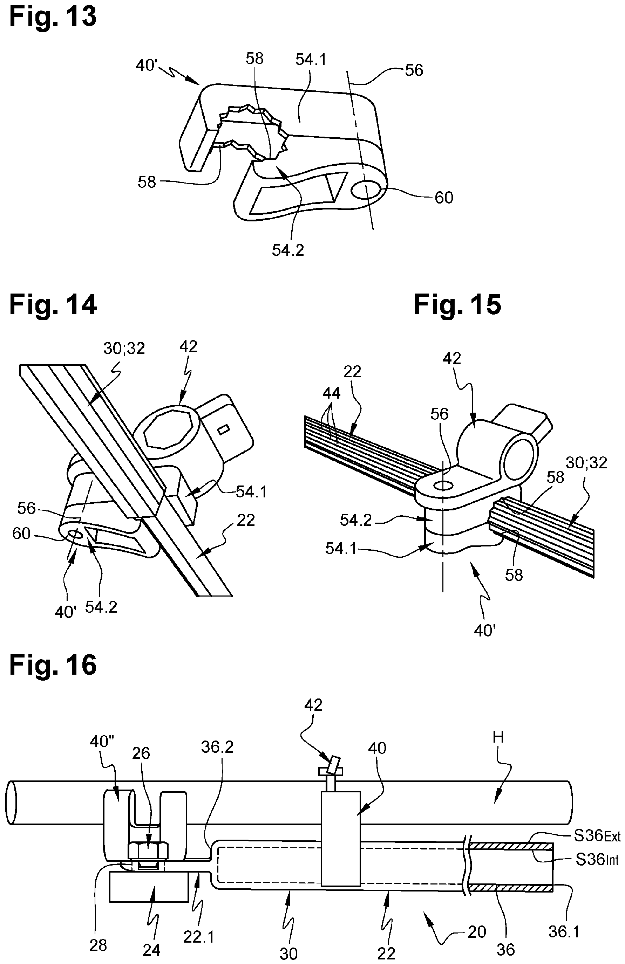

La rampe 20 comprend une barre 22 sensiblement rectiligne présentant des première et deuxième extrémités 22.1, 22.2 reliées de manière démontable à au moins un support 24 (visible sur la figure 16) par des éléments de fixation 26. Selon un mode de réalisation, la barre 22 comprend, à chacune de ses première et deuxième extrémités 22.1, 22.2, un oeillet 28 (visible sur la figure 5). Chacun des éléments de fixation 26 se présente sous la forme d'une vis traversant l'œillet 28 et se vissant dans le support 24, comme illustré sur la figure 16. Bien entendu, l'invention n'est pas limitée à ce mode de réalisation pour assurer la liaison entre la barre 22 et le support 24.

Pour la suite de la description, une direction longitudinale correspond à une direction passant par les éléments de fixation 26 prévus aux première et deuxième extrémités 22.1, 22.2 de la barre 22 de la rampe 20. Un plan transversal est un plan perpendiculaire à la direction longitudinale.

La barre 22 s'étend selon la direction longitudinale et présente une longueur L0, dimension prise selon la direction longitudinale, égale à la distance séparant les éléments de fixation 26 prévus aux première et deuxième extrémités 22.1, 22.2 de la barre 22.

La barre 22 comprend au moins deux parties 30, 32 configurées pour coulisser l'une par rapport à l'autre selon la direction longitudinale, une première partie 30 étant reliée, directement ou indirectement, à la première extrémité 22.1 et une deuxième partie 32 étant reliée, directement ou indirectement, à la deuxième partie 22.2. Grâce au coulissement entre les première et deuxième parties 30, 32, la longueur L0 de la barre 22 de la rampe 20 peut varier et être ajustée à la distance séparant les éléments de fixation 26 prévus aux première et deuxième extrémités 22.1, 22.2 de la barre 22.

Selon un mode de réalisation visible sur les figures 3 à 7, la barre 22 comprend une première partie 30 comportant la première extrémité 22.1, une deuxième partie 32 comportant la deuxième extrémité 22.2 ainsi qu'une troisième partie dite partie intermédiaire 34 intercalée entre les première et deuxième parties 30, 32 coulissant par rapport à au moins une des première et deuxième parties 30, 32.

Selon une première configuration, chacune des première et deuxième parties 30, 32 est configurée pour coulisser par rapport à la partie intermédiaire 34.

Selon une deuxième configuration, la deuxième partie 32 et la partie intermédiaire 34 sont fixes l'une par rapport à l'autre et la première partie 30 est configurée pour coulisser par rapport à la partie intermédiaire 34.

Selon un mode de réalisation, les première et deuxième parties 30, 32 sont identiques. Comme illustré sur la figure 16, chacune des première et deuxième parties 30, 32 comprend un tube 36 présentant une surface extérieure S36Ext, une surface intérieure S36Int de section transversale sensiblement constante sur sa longueur, une première extrémité 36.1 ouverte, via laquelle est insérée la partie intermédiaire 34, ainsi qu'une deuxième extrémité 36.2 obturée à laquelle est relié l'œillet 28.

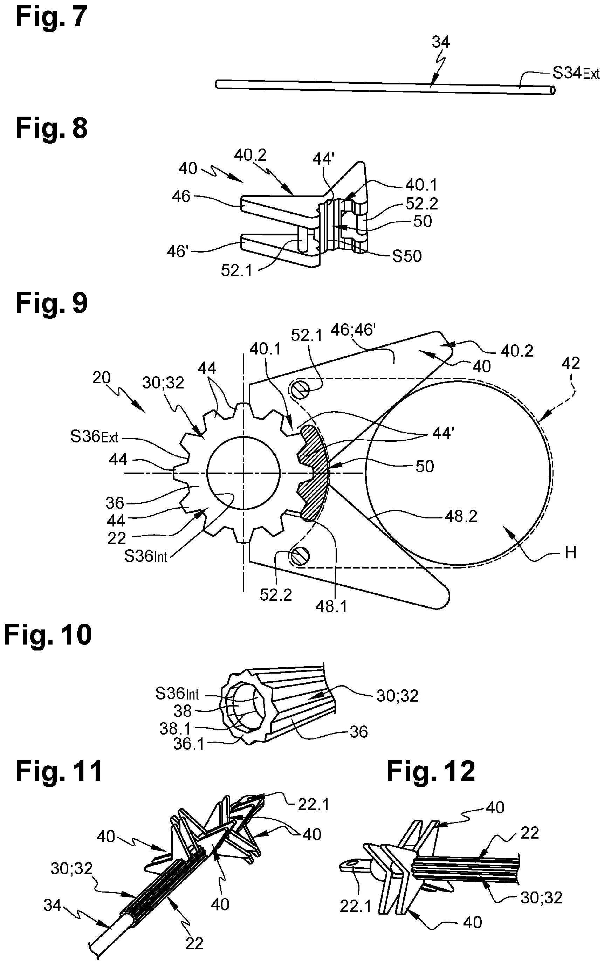

En complément, comme illustré sur la figure 7, la partie intermédiaire 34 est un élément longiligne et comprend une surface extérieure S34Ext de section transversale sensiblement constante sur sa longueur et approximativement égale à la section transversale de la surface intérieure S36Int du tube 36 pour permettre à la partie intermédiaire 34 de coulisser dans le tube 36 de la première ou deuxième partie 30, 32.

La partie intermédiaire 34 peut être pleine ou creuse.

Selon un mode de réalisation, la section transversale de la surface extérieure S34Ext de la partie intermédiaire 34 et la section transversale de la surface intérieure S36lnt du tube 36 de la première ou deuxième partie 30, 32 ont une section identique et circulaire. Cette solution permet à la première ou deuxième partie 30, 32 ou aux deux de pivoter par rapport à la partie intermédiaire 34 autour d'un axe de pivotement confondu avec l'axe de révolution de la partie intermédiaire 34 ou du tube 36 de la première ou deuxième partie 30, 32.

Selon un mode de réalisation, un joint d'étanchéité 38 est intercalé entre les parties mobiles de la barre 22. Selon une configuration visible sur la figure 10, un joint d'étanchéité 38 est solidaire de la première ou deuxième partie 30, 32 et positionné dans le tube 36, sur la surface intérieure S36Int, à proximité de sa première extrémité 36.1. Ce joint d'étanchéité 38 limite l'infiltration de fluide à l'intérieur du tube 36. Il permet également d'absorber d'éventuelles vibrations. Selon une configuration, le joint d'étanchéité 38 présente une fente 38.1 longitudinale pour permettre à l'air de pénétrer ou de sortir du tube 36 lors du coulissement de la première ou deuxième partie 30, 32 et de la partie intermédiaire 34 l'une par rapport à l'autre. Cette fente 38.1 est configurée pour permettre le passage de l'air et limiter le passage d'un liquide à l'intérieur du tube 36.

La rampe 30 comprend plusieurs supports 40 répartis le long de la barre 22, reliés à cette dernière. Le harnais électrique H est relié aux différents supports 40 par des liens 42 identiques à ceux de l'art antérieur par exemple.

Selon un agencement, les supports 40 sont positionnés sur les première et deuxième parties 30, 32 et ne sont pas positionnés sur la partie intermédiaire 34 pour permettre le coulissement d'au moins une des première et deuxième parties 30, 32 par rapport à la partie intermédiaire 34.

Au moins un support 40 est relié à l'une des parties 30, 32, 34 de la barre 22 par une liaison démontable pour permettre d'ajuster le positionnement et l'orientation de chaque support 40 sur la barre 22 de la rampe 20.

Selon un premier mode de réalisation visible sur les figures 5, 8, 9, 11 et 12, le support 40 est réalisé en une seule pièce.

Selon une configuration visible sur la figure 9, la surface extérieure S36Ext du tube 36 de chacune des première et deuxième parties 30, 32 présente des cannelures 44 longitudinales qui s'étendent sur quasiment toute la longueur du tube 36 et sont réparties de manière homogène sur toute sa circonférence. A titre indicatif, chacune des première et deuxième parties 30, 32 comprend douze cannelures 44.

Selon ce premier mode de réalisation, le support 40 comprend une première zone 40.1 configurée pour permettre de le relier de manière démontable avec la barre 22 de la rampe 20 ainsi qu'une deuxième zone 40.2 configurée pour recevoir le harnais électrique H et le positionner selon un chemin de câble souhaité, un lien 42 étant prévu pour relier le harnais électrique H et le support 40.

La première zone 40.1 du support 40 comprend une surface présentant une forme complémentaire à celle de la surface extérieure S36Ext du tube 36 de chacune des première et deuxième parties 30, 32 pour le relier de manière démontable à la première ou deuxième partie 30, 32 de la barre 22.

Selon une configuration visible sur les figures 8 et 9, le support 40 comprend deux ailes 46, 46' identiques, positionnées dans des plans transversaux en fonctionnement et espacées entre elles, chaque aile 46, 46' comprenant un premier bord 48.1 en arc de cercle présentant une forme complémentaire à celle de la surface extérieure S36Ext du tube 36 de chacune des première et deuxième parties 30, 32 ainsi qu'un deuxième bord 48.2, par exemple en V, formant un logement pour un harnais électrique H.

Le support 40 comprend au moins un élément de jonction pour relier les deux ailes 46, 46'. Selon une configuration, le support 40 comprend un élément de jonction central 50 présentant une surface courbe S50, avec une section en arc de cercle et positionnée dans le prolongement des premiers bords 48.1 des deux ailes 46, 46', ainsi que deux éléments de jonction latéraux 52.1, 52.2 disposés de part et d'autre de l'élément de jonction central 50, par exemple de forme cylindrique, permettant d'accrocher un lien 42 tel qu'un collier de serrage autobloquant par exemple.

Lorsque la surface extérieure S36Ext du tube 36 comprend des cannelures 44, le premier bord 48.1 de chaque aile 46, 46' ainsi que la surface courbe S50 de l'élément de jonction central 50 comprennent également des cannelures 44' complémentaires à celles du tube 36. Selon ce premier mode de réalisation, chacun des supports 40 peut se clipser sur la première ou deuxième partie 30, 32 en se déformant de manière élastique et/ou peut être enfilé depuis une extrémité de la première ou deuxième partie 30, 32.

Comme illustré sur la figure 11, le support 40 peut être orienté de différentes manières autour de la première ou deuxième partie 30, 32 et positionné à différentes positions le long de la première ou deuxième partie 30, 32. De plus, comme illustré sur la figure 12, deux supports 40 peuvent être positionnés diamétralement opposés sur la première ou deuxième partie 30, 32 et permettre de supporter deux harnais électriques disposés de part et d'autre de la première ou deuxième partie 30, 32.

En fonctionnement, chaque support 40 est immobilisé en rotation par rapport à la première ou deuxième partie 30, 32 grâce aux cannelures 44, 44' et en translation le long de la première ou deuxième partie 30, 32 grâce aux frottements entre le support 40 et la première ou deuxième partie 30, 32.

Selon un deuxième mode de réalisation visible sur les figures 13 à 15, le support 40' comprend des premier et deuxième mors 54.1, 54.2 ainsi qu'un élément de liaison 56 permettant de relier les premier et deuxième mors 54.1, 54.2 pour qu'ils enserrent la première ou deuxième partie 30, 32.

Selon ce deuxième mode de réalisation, les première et deuxième parties 30, 32 peuvent être identiques à celles du premier mode de réalisation et présenter des cannelures. En complément, les premier et deuxième mors 54.1, 54.2 présentent chacun une portion courbe 58 pourvue de cannelures ainsi qu'un trou traversant 60 pour loger l'élément de liaison 56.

Selon une configuration, le harnais électrique H est relié au support 40' par un lien comme un collier rigide par exemple, lui-même relié au support 40' grâce à l'élément de liaison 56.

Bien entendu, l'invention n'est pas limitée aux premier et deuxième modes de réalisation pour les supports. D'autres solutions sont envisageables. De plus, les supports ne sont pas nécessairement positionnés sur les première et deuxième parties 30, 32. Ainsi, comme illustré sur la figure 16, certains supports 40 peuvent être positionnés sur la première ou deuxième partie 30, 32 alors qu'au moins un autre support 40" est positionné à l'une des première et deuxième extrémités 22.1, 22.2 de la barre 22 de la rampe 20 et relié à cette dernière grâce à un des éléments de fixation 26.

Selon l'invention à partir de trois modèles de pièces, un premier modèle correspondant aux première et deuxième parties 30, 32, un deuxième modèle correspondant à la partie intermédiaire 34 ainsi qu'un troisième modèle correspondant aux supports 40, il est possible d'obtenir un grand nombre de variantes de rampes 20 présentant chacune une longueur adaptable et pourvues chacune de supports dont l'orientation et la position peuvent être adaptées.

## Revendications

1. Rampe pour harnais électrique comprenant une barre (22) rectiligne, s'étendant selon une direction longitudinale, présentant des première et deuxième extrémités (22.1, 22.2) configurées pour être reliées de manière démontable à au moins un support (24) en fonctionnement ainsi que plusieurs supports (40) répartis le long de la barre (22), reliés à cette dernière, auxquels est relié au moins un harnais électrique (H) en fonctionnement, la barre (22) comprend au moins deux parties (30, 32, 34) configurées pour coulisser l'une par rapport à l'autre selon la direction longitudinale, une première partie (30) étant reliée à la première extrémité (22.1) et une deuxième partie (32) étant reliée à la deuxième extrémité (22.2) **caractérisée en ce que**, au moins une des première et deuxième parties (30, 32) comporte un tube (36) présentant une surface extérieure (S36Ext) pourvue de cannelures (44) longitudinales qui s'étendent sur quasiment toute la longueur du tube (36) et sont réparties de manière homogène sur toute sa circonférence.

2. Rampe pour harnais électrique selon l'une des revendications précédentes, **caractérisée en ce qu'**au moins un support (40) est relié à l'une des parties (30, 32, 34) de la barre (22) par une liaison démontable.

3. Rampe pour harnais électrique selon la revendication 1 ou 2, **caractérisée en ce que** la barre (22) comprend une première partie (30) comportant la première extrémité (22.1), une deuxième partie (32) comportant la deuxième extrémité (22.2) ainsi qu'une partie intermédiaire (34) intercalée entre les première et deuxième parties (30, 32) coulissant par rapport à au moins une des première et deuxième parties (30, 32).

4. Rampe pour harnais électrique selon la revendication précédente, **caractérisée en ce que** les première et deuxième parties (30, 32) sont identiques et comprennent chacune un tube (36) présentant une surface extérieure (S36Ext), une surface intérieure (S36Int) ainsi qu'une première extrémité (36.1) ouverte via laquelle est introduite la partie intermédiaire (34), cette dernière présentant une surface extérieure (S34Ext) lui permettant de coulisser dans le tube (36) de la première ou deuxième partie (30, 32).

5. Rampe pour harnais électrique selon la revendication précédente, **caractérisée en ce que** la surface extérieure (S34Ext) de la partie intermédiaire (34) présente une section transversale circulaire et **en ce que** la surface intérieure (S36Int) du tube (36) de la première ou deuxième partie (30, 32) présente une section transversale circulaire identique à celle de la surface extérieure (S34Ext) de la partie intermédiaire (34).

6. Rampe pour harnais électrique selon la revendication 4 ou 5, **caractérisée en ce que** la rampe comprend un joint d'étanchéité (38) solidaire de la première ou deuxième partie (30, 32) et positionné dans le tube (36), sur la surface intérieure (S36Int), à proximité de sa première extrémité (36.1).

7. Rampe pour harnais électrique selon l'une des revendications précédentes, **caractérisée en ce que** le support (40) est réalisé en une seule pièce et comprend une première zone (40.1) comportant une surface présentant une forme complémentaire à celle de la surface extérieure (S36Ext) du tube (36) de la première ou deuxième partie (30, 32) de la barre (22) pour relier, de manière démontable, le support (40) et la première ou deuxième partie (30, 32).

8. Rampe pour harnais électrique selon la revendication précédente, **caractérisée en ce que** le support (22) comprend deux ailes (46, 46') identiques, positionnées dans des plans transversaux en fonctionnement et espacées entre elles, ainsi qu'au moins un élément de jonction (50, 52.1, 52.2) pour relier les deux ailes (46, 46'), chaque aile (46, 46') comprenant un premier bord (48.1) en arc de cercle présentant une forme complémentaire à celle de la surface extérieure (S36Ext) du tube (36) de chacune des première et deuxième parties (30, 32).

9. Rampe pour harnais électrique selon l'une des revendications 2 à 6, **caractérisée en ce que** le support (40') comprend des premier et deuxième mors (54.1, 54.2) ainsi qu'un élément de liaison (56) permettant de relier les premier et deuxième mors (54.1, 54.2) pour qu'ils enserrent la première ou deuxième partie (30, 32) de la barre (22).

10. Aéronef comprenant au moins une rampe pour harnais selon l'une des revendications précédentes, la rampe comprenant une barre (22) rectiligne, s'étendant selon une direction longitudinale, présentant des première et deuxième extrémités (22.1, 22.2) configurées pour être reliées de manière démontable à au moins un support (24) en fonctionnement ainsi que plusieurs supports (40) répartis le long de la barre (22), reliés à cette dernière, auxquels est relié au moins un harnais électrique (H) en fonctionnement, la barre (22) comprenant au moins deux parties (30, 32, 34) configurées pour coulisser l'une par rapport à l'autre selon la direction longitudinale, une première partie (30) étant reliée à la première extrémité (22.1) et une deuxième partie (32) étant reliée à la deuxième partie (22.2) **caractérisée en ce que**, au moins une des première et deuxième parties (30, 32) comportant un tube (36) présentant une surface extérieure (S36Ext) pourvue de cannelures (44) longitudinales qui s'étendent sur quasiment toute la longueur du tube (36) et sont réparties de manière homogène sur toute sa circonférence.

## Patentansprüche

1. Führung für einen elektrischen Kabelbaum mit einer geradlinigen, sich in Längsrichtung erstreckenden Stange (22), mit einem ersten und einem zweiten Ende (22.1, 22.2), die so eingerichtet sind, dass sie im Betrieb lösbar mit wenigstens einem Träger (24) verbunden sind, sowie mehrere entlang der Stange (22) verteilte und mit dieser verbundene Träger (40), mit denen im Betrieb wenigstens ein elektrischer Kabelbaum (H) verbunden ist, wobei die Stange (22) wenigstens zwei Teile (30, 32, 34) umfasst, die so eingerichtet sind, dass sie in Längsrichtung relativ zueinander gleiten, wobei ein erstes Teil (30) mit dem ersten Ende (22.1) und ein zweites Teil (32) mit dem zweiten Ende (22.2) verbunden ist, **dadurch gekennzeichnet, dass** wenigstens eines der ersten und zweiten Teile (30, 32) ein Rohr (36) mit einer Außenfläche (S36Ext) umfasst, die mit Längsrillen (44) versehen ist, die sich im Wesentlichen über die gesamte Länge des Rohres (36) erstrecken und gleichmäßig über den gesamten Umfang des Rohres verteilt sind.

2. Führung für einen elektrischen Kabelbaum nach einem der vorhergehenden Ansprüche, **dadurch gekennzeichnet, dass** wenigstens ein Träger (40) mit einem der Teile (30, 32, 34) der Stange (22) durch eine lösbare Verbindung verbunden ist.

3. Führung für einen elektrischen Kabelbaum nach Anspruch 1 oder 2, **dadurch gekennzeichnet, dass** die Stange (22) ein erstes Teil (30) mit dem ersten Ende (22.1), ein zweites Teil (32) mit dem zweiten Ende (22.2) sowie ein zwischen den ersten und zweiten Teilen (30, 32) eingefügtes Zwischenteil (34) umfasst, das in Bezug auf wenigstens eines der ersten und zweiten Teile (30, 32) verschiebbar ist.

4. Führung für einen elektrischen Kabelbaum nach dem vorhergehenden Anspruch, **dadurch gekennzeichnet, dass** das erste und das zweite Teil (30, 32) identisch sind und jeweils ein Rohr (36) mit einer Außenfläche (S36Ext), einer Innenfläche (S36Int) sowie einem ersten offenen Ende (36.1) umfassen, über das das Zwischenteil (34) eingeführt wird, wobei letzteres eine Außenfläche (S34Ext) aufweist, die es ihm ermöglicht, in dem Rohr (36) des ersten oder zweiten Teils (30, 32) zu gleiten.

5. Führung für einen elektrischen Kabelbaum nach dem vorhergehenden Anspruch, **dadurch gekennzeichnet, dass** die Außenfläche (S34Ext) des Zwischenteils (34) einen kreisförmigen Querschnitt aufweist und dass die Innenfläche (S36Int) des Rohrs (36) des ersten oder zweiten Teils (30, 32) einen kreisförmigen Querschnitt aufweist, der mit demjenigen der Außenfläche (S34Ext) des Zwischenteils (34) identisch ist.

6. Führung für einen elektrischen Kabelbaum nach Anspruch 4 oder 5, **dadurch gekennzeichnet, dass** die Führung eine Dichtung (38) umfasst, die mit dem ersten oder zweiten Teil (30, 32) fest verbunden ist und im Rohr (36) auf der Innenfläche (S36Int) in der Nähe seines ersten Endes (36.1) angeordnet ist.

7. Führung für einen elektrischen Kabelbaum nach einem der vorhergehenden Ansprüche, **dadurch gekennzeichnet, dass** der Träger (40) aus einem Stück gefertigt ist und einen ersten Bereich (40.1) mit einer Oberfläche umfasst, die eine Form aufweist, die komplementär zu der der Außenfläche (S36Ext) des Rohrs (36) des ersten oder zweiten Teils (30, 32) der Stange (22) ist, um den Träger (40) und das erste oder zweite Teil (30, 32) lösbar miteinander zu verbinden.

8. Führung für einen elektrischen Kabelbaum nach dem vorhergehenden Anspruch, **dadurch gekennzeichnet, dass** der Träger (22) zwei identische Flügel (46, 46') umfasst, die im Betrieb in Querebenen angeordnet und voneinander beabstandet sind, sowie wenigstens ein Verbindungselement (50, 52.1, 52.2) zum Verbinden der beiden Flügel (46, 46'), wobei jeder Flügel (46, 46') einen ersten bogenförmigen Rand (48.1) mit einer Form aufweist, die komplementär zu derjenigen der Außenfläche (S36Ext) des Rohrs (36) von jedem der ersten und zweiten Teile (30, 32) ist.

9. Führung für einen elektrischen Kabelbaum nach einem der Ansprüche 2 bis 6, **dadurch gekennzeichnet, dass** der Träger (40') eine erste und eine zweite Backe (54.1, 54.2) sowie ein Verbindungselement (56) umfasst, mit dem die erste und die zweite Backe (54.1, 54.2) so verbunden werden können, dass sie den ersten oder den zweiten Teil (30, 32) der Stange (22) umschließen.

10. Flugzeug mit wenigstens einer Führung für einen Kabelbaum nach einem der vorhergehenden Ansprüche, wobei die Führung eine geradlinige Stange (22) umfasst, die sich in einer Längsrichtung erstreckt und ein erstes und ein zweites Ende (22.1, 22.2) aufweist, die so eingerichtet sind, dass sie im Betrieb lösbar mit wenigstens einem Träger (24) verbunden sind, sowie mehrere entlang der Stange (22) verteilte und mit dieser verbundene Träger (40), mit denen im Betrieb wenigstens ein elektrischer Kabelbaum (H) verbunden ist, wobei die Stange (22) wenigstens zwei Teile (30, 32, 34) umfasst, die so eingerichtet sind, dass sie in Längsrichtung relativ zueinander gleiten, wobei ein erstes Teil (30) mit dem ersten Ende (22. 1) und ein zweites Teil (32) mit dem zweiten Teil (22.2) verbunden ist, **dadurch gekennzeichnet, dass** wenigstens eines der ersten und zweiten Teile (30, 32) ein Rohr (36) umfasst, das eine Außenfläche (S36Ext) aufweist, die mit Längsrillen (44) versehen ist, die sich über nahezu die gesamte Länge des Rohrs (36) erstrecken und gleichmäßig über dessen gesamten Umfang verteilt sind.

## Claims

1. A boom for an electrical harness, comprising a straight bar (22) extending in a longitudinal direction and having first and second ends (22.1, 22.2) configured so they can be removably attached to at least one support (24) during operation, and several supports (40) distributed along and attached to the bar (22), to which supports at least one electrical harness (H) is attached in operation, the bar (22) comprising at least two parts (30, 32, 34) configured so as to slide relative to one another in the longitudinal direction, a first part (30) being attached to the first end (22.1) and a second part (32) being attached to the second end (22.2), **characterized in that** at least one of the first and second parts (30, 32) comprises a tube (36) having an outer surface (S36Ext) provided with longitudinal splines (44) which extend over almost the entire length of the tube (36) and are evenly distributed over its entire circumference.

2. The boom for an electrical harness as claimed in any of the preceding claims, wherein at least one support (40) is attached to one of the parts (30, 32, 34) of the bar (22) by a removable connection.

3. The boom for an electrical harness as claimed in claim 1 or 2, wherein the bar (22) comprises a first part (30) having the first end (22.1), a second part (32) having the second end (22.2), and an intermediate part (34) interposed between the first and second parts (30, 32) and sliding relative to at least one of the first and second parts (30, 32).

4. The boom for an electrical harness as claimed in the preceding claim, wherein the first and second parts (30, 32) are identical and each comprises a tube (36) having an outer surface (S36Ext), an inner surface (S36Int) and a first open end (36.1) via which the intermediate part (34) is introduced, the latter having an outer surface (S34Ext) enabling it to slide in the tube (36) of the first or second part (30, 32).

5. The boom for an electrical harness as claimed in the preceding claim, wherein the outer surface (S34Ext) of the intermediate part (34) has a circular cross-section, and the inner surface (S36Int) of the tube (36) of the first or second part (30, 32) has a circular cross-section identical to that of the outer surface (S34Ext) of the intermediate part (34).

6. The boom for an electrical harness as claimed in claim 4 or 5, wherein the boom comprises a seal (38) which is integral with the first or second part (30, 32) and positioned in the tube (36) on the inner surface (S36Int) close to its first end (36.1).

7. The boom for an electrical harness as claimed in any of the preceding claims, wherein the support (40) is made from one piece and comprises a first zone (40.1) having a surface of shape complementary to that of the outer surface (S36Ext) of the tube (36) of the first or second part (30, 32) of the bar (22), in order to removably connect the support (40) and the first or second part (30, 32).

8. The boom for an electrical harness as claimed in the preceding claim, wherein the support (22) comprises two identical wings (46, 46') positioned in transverse planes during operation and spaced apart from one another, and at least one joining element (50, 52.1, 52.2) for connecting the two wings (46, 46'), each wing (46, 46') comprising a first arcuate edge (48.1) having a shape complementary to that of the outer surface (S36Ext) of the tube (36) of each of the first and second parts (30, 32).

9. The boom for an electrical harness as claimed in any of claims 2 to 6, wherein the support (40') comprises first and second clamping jaws (54.1, 54.2) and a connecting element (56) allowing connection of the first and second clamping jaws (54.1, 54.2) so that they clamp the first or second part (30, 32) of the bar (22).

10. An aircraft comprising at least one boom for an electrical harness as claimed in any of the preceding claims, the boom comprising a straight bar (22) extending in a longitudinal direction and having first and second ends (22.1, 22.2) configured so they can be removably attached to at least one support (24) during operation, and several supports (40) distributed along and attached to the bar (22), to which supports at least one electrical harness (H) is attached in operation, the bar (22) comprising at least two parts (30, 32, 34) configured so as to slide relative to one another in the longitudinal direction, a first part (30) being attached to the first end (22.1) and a second part (32) being attached to the second end (22.2), **characterized in that** at least one of the first and second parts (30, 32) comprises a tube (36) having an outer surface (S36Ext) provided with longitudinal splines (44) which extend over almost the entire length of the tube (36) and are evenly distributed over its entire circumference.
